# EUROPEAN PATENT SPECIFICATION

(11) **EP 0 814 630 B1**
(45) Date of publication and mention of the grant of the patent: **02.02.2005**
(21) Application number: 96109860.5
(22) Date of filing: 19.06.1996
(51) Int. Cl.: H04Q 11/04

(54) **An ATM cell processing system and method for accessing a connection memory**
ATM-Zellenverarbeitungssystem und Methode zum Zugriff auf einen Verbindungsspeicher
Système de traitement de cellules ATM et méthode d'accès à une mémoire de connections

(43) Date of publication of application: 29.12.1997
(73) Proprietor: Freescale Semiconductor, Inc., Austin, Texas 78735 (US)
(72) Inventor: Shtayer, Ronen, Herzlia 46364 (IL); Elkanovitch, Igor, Natanya 42840 (IL); Eliyahu, Ron, Herzlia 46494 (IL)
(74) Representative: Wharmby, Martin Angus

(56) References cited:
- EP-A- 0 320 772
- US-A- 5 189 666
- T. SHANLEY: "The IBM PS/2 From the Inside Out" December 1990 , ADDISON-WESLEY , 12.1990 XP002023813 19406 * page 348, line 1 - page 351, line 3 *
- COMMUNICATION FOR GLOBAL USERS, ORLANDO, DEC. 6 - 9, 1992, vol. 3 OF 3, 6 December 1992, INSTITUTE OF ELECTRICAL AND ELECTRONICS ENGINEERS, pages 1282-1287, XP000390422 OECHSLIN P ET AL: "ALI: A VERSATILE INTERFACE CHIP FOR ATM SYSTEMS"

## Description

### Background of the Invention

The invention pertains to the field of telecommunications and, more particularly to a packet switch for a transfer of data in asynchronous mode in a digital transmission network, which can be used notably in an integrated data services network designed for the transmission of data, of different origins, at greatly differing throughput rates, the different services being capable of using data throughput rates that vary in a broad range. Such a system is commonly known as the "broad band ISDN system".

The asynchronous transfer mode (ATM) has been chosen by standard committees as an underlying transport technology within many broad band integrated services digital network protocol stacks. A description of the standardized ATM telecommunications concept can be found in a publication of the ATM forum entitled "ATM user-network interface specifications", 1993, published by PTR Prentice Hall.

ATM switching systems are required to maintain running counts of the cells that are processed on each virtual connection. ATM switching systems usually also store indications of various events that are detected by processing the cell flow of the virtual connections. The number of virtual connections using a single physical link typically numbers in the tenth of thousands.

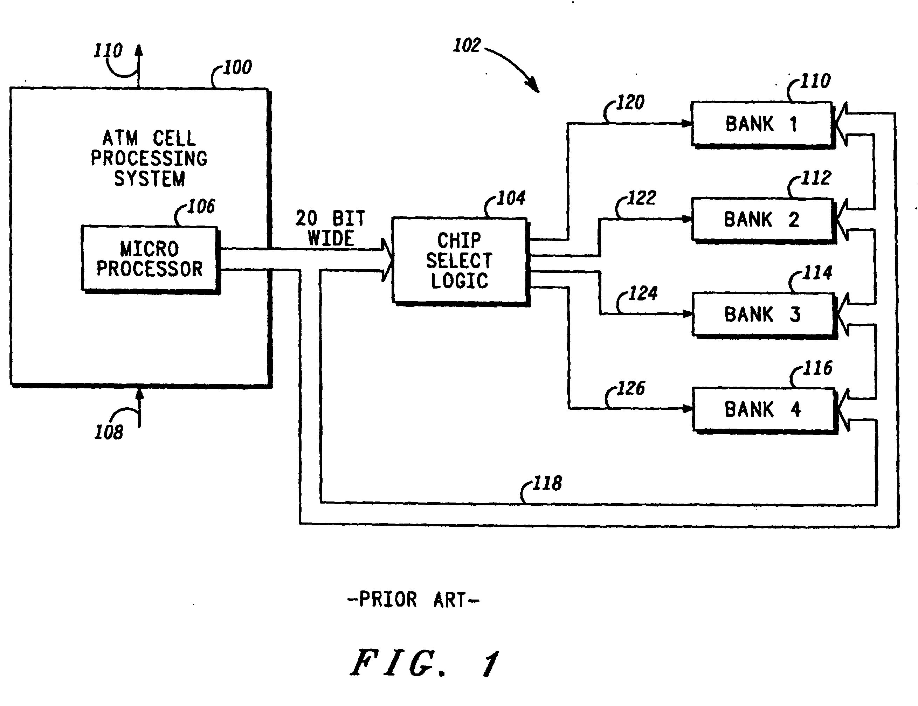

FIG. 1 shows a prior art ATM cell processing system 100 which is coupled to connection memory 102 via chip select logic 104. The ATM cell processing system 100 comprises a micro processor 106 which controls the establishment of virtual connections via input lines 108 and output lines 110 which are coupled to the ATM cell processing system 100. The processor 106 detects various events while processing the cell flow of the virtual connections, such as running counts or other information required for billing purposes. Since there is a very high number of virtual connections which use a single physical link, the event indications detected by the processor 106 and the running counts have to be stored and maintained in the connection memory 102 which is organized as a random access memory (RAM). The processor 106 uses the connection memory 102 as its private memory. Since one single physical memory component does not have enough storage capacity for all the information which is to be stored by the processor 106, the connection memory 102 is split up into four memory banks 110, 112, 114 and 116.

The memory banks 110-116 are connected via the address bus 118 to the micro processor 106. The chip select logic 104 is also connected to the address bus 118. The data bus which is needed for data transmittals from the micro processor 106 to the connection memory 102 and vice versa is not shown in the drawing for simplicity. The chip select logic 104 is coupled to the individual memory banks 110, 112, 114 and 116 via the bank select lines 120, 122, 124 and 126, respectively.

When the micro processor 106 wants to access the connection memory 102, it issues a 20 bit wide address on the address bus 118. The bit positions 0-17 on the address bus 118 directly serve to access a specific storage location in one of the memory banks 110-116. All memory banks 110-116 receive the same address via the address bus 118. The two most significant bits, i.e. bit positions 18 and 19 of the address bus 118 are used in the chip select logic 104 to select one of the memory banks 110-116 which corresponds to the address of the access request of the micro processor 106 considered here.

The 20 bit wide address space which can be accessed by the micro processor 106 is divided into four sections having the same size. Each section of the address space belongs to one of the memory banks 110-116. Hence, each section of the memory space has its own memory bank. If the two most significant bit positions 18 and 19 are logically "11" that means that the memory bank 110 which holds the upper portion of the memory space is to be accessed.

As a consequence the chip select logic 104 raises the bank select line 120 to enable the memory bank 110. The other bank select lines 122, 124 and 126 remain logically low so that the corresponding memory banks 112, 114 and 116 remain disabled. Thus, the address which is present on the address bus 118 is ignored by the disabled memory banks 112, 114 and 116 whereas the bit positions 0-17 of the address which is present on the address bus 118 are used in the memory bank 110 to access a specific memory location for read and/or write purposes. Likewise, if other sections of the memory space are addressed by the micro processor 106 other memory banks are selected to perform access operations.

Such access operations can only be carried out when there is a "hole" in the cell flow. Such holes in the cell flow are provided periodically in the ATM cell processing system 100. This is accomplished by processing the ATM cells within the ATM cell processing system 100 at a rate slightly above the transmission rate of the physical input and output lines 108 and 110.

EP-A-0 320 772 discloses a sorter module in an ATM network in which data is stored in a memory module.

'The IBM PS/2 From the Inside Out' December 1990, Addison-Wesley, 12.1990 XP002023813 19406 disclose a data processing system that uses memory banks for storing data.

The invention is aimed to provide an improved ATM cell processing system and an improved method for accessing a connection memory of such a system.

### Summary of the Invention

The objects of the invention are solved basically by applying the features laid down in the independent claims. Further preferred embodiments of the invention are given in the dependent claims.

The invention allows to more efficiently utilize the holes in the cell flow for maintenance purposes since the time required for an access operation to the connection memory from the micro processor is decreased.

The invention is advantageous in that it allows to couple a connection memory to an ATM cell processing system without any glue logic. Since all the decoding to access the memory banks is done internal the ATM cell processing system, a flexible interface is provided which minimizes the restrictions and requirements for the external memory components used to realize the memory banks. Hence, it is possible to utilize a wide range of relatively inexpensive memory devices for the memory banks.

Furthermore, the invention allows to minimize access times to the connection memory. This is due to the fact that no more glue logic is required and therefore the control and address signal lines are shorter and less loaded. There is no more need to buffer the signal lines to drive the load. Also the delay due to bank decoding in the external chip logic of the prior art is minimized since the decoding is done more efficiently within the boundary of the ATM cell processing system and can even be implemented on the same chip as the micro processor of the system. Performing the bank select decoding internally eliminates the uncertainty of the decoding delay from the interface design.

According to a preferred embodiment of the invention the address space comprises two sets of bit positions: one for the purposes of generating a bank select signal and the other for addressing a memory location in one of the memory banks. A pointer can be used to separate the two sets of bit positions for the decoding of the address to generate the bank select signal and to address a memory location. There is no restriction on the placement of the bit positions which form part of different sets of bit positions. However, the set of bit positions which serves to generate the bank select signal preferably occupies the most significant bit positions of the address.

It is also possible to use only one memory bank to implement the connection memory which is realized by a number of different memory components. In this case each memory component serves to store a specific bit slice of a data word. If more than one bank is present it is also possible to realize each of the banks by a plurality of memory components each of which storing a bit slice.

### Brief Description of the Drawing

The invention will be better understood, and other characteristics will appear, from the following description, made with reference to the appended drawings, wherein:
FIG. 1 is a block diagram of a prior art ATM cell processing system and a connection memory coupled thereto;
FIG. 2 is a schematic block diagram of an ATM cell processing system according to the invention and a connection memory coupled thereto;
FIG. 3 is a block diagram of a second preferred embodiment of the invention;
FIG. 4 comprises two tables which illustrate different options to separate an address into two sets of bit positions; and
FIG. 5 shows a flow chart of the method for accessing the connection memory.

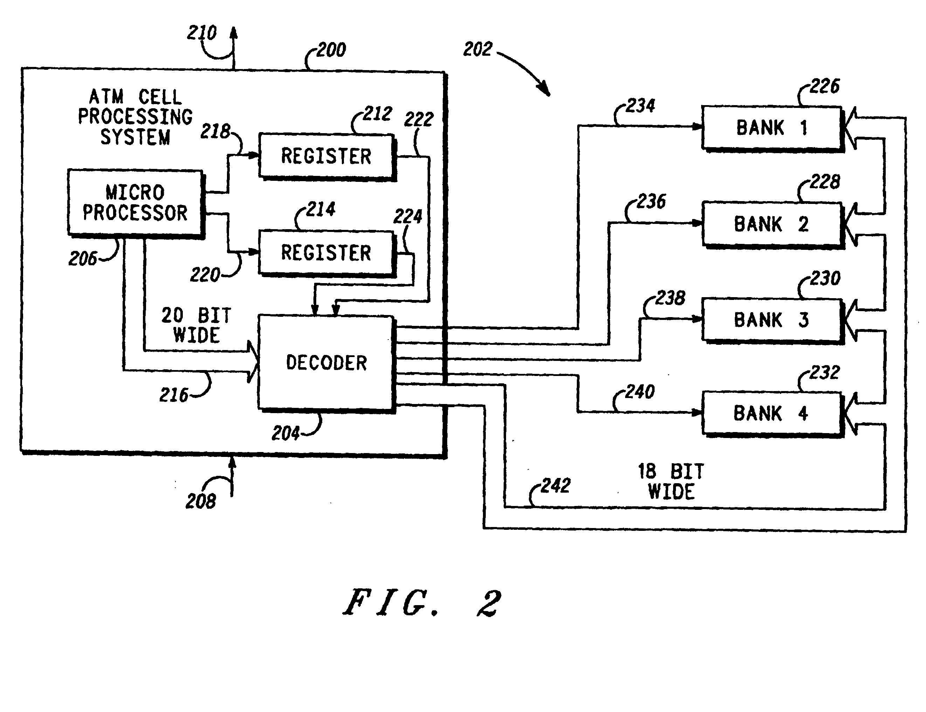

With reference to FIG. 2 now a first preferred embodiment of the invention is described in the following. FIG. 2 shows ATM cell processing system 200 and connection memory 202. The ATM cell processing system 200 comprises micro processor 206, decoder 204 as well as the registers 212 and 214. The ATM cell processing system 200 has input lines 208 and output lines 210 which serve to establish physical connections. Via each physical connection a very high number of virtual logical connections are established under the control of the micro processor 206. Like it is as such known from the prior art, the processing in the ATM cell processing system 200 is done by the micro processor 206 at a rate which is slightly above the physical transmission rate on the input and output lines 208 and 210 so that at regular intervals "holes" are provided in the cell flow. The time intervals in which such holes are present, are used for maintenance purposes which require access to the connection memory 202.

The micro processor 206 is coupled to the decoder 204 via address bus 216. In the example considered here the address bus is 20 bit wide. Further, the micro processor 206 is coupled via lines 218 and 220 to the registers 212 and 214, respectively. The registers 212 and 214 are coupled via lines 222 and 224, respectively, to the decoder 204.

The connection memory 202 has four memory banks 226, 228, 230 and 232. The connection memory 202 is equivalent to the connection memory 102 shown in FIG. 1. The memory banks 226-232 are connected to bank select lines 234, 236, 238 and 240, respectively. The other sides of the bank select lines 234-240 are connected to the decoder 204. The address input of each of the memory banks 226-232 is connected to the address bus 242 which is also connected to the decoder 204.

The register 212 serves as a storage means for storage of data indicative of the number of memory banks which in the example considered here is four. The register 214 serves as another storage means for storage of a pointer to a first set of bit positions which serve as a basis to generate bank select signals or, alternatively, for indicating the most significant bit position (MSB) in an address. By combining the information stored in the registers 212 and 214 a window is defined which covers the bit positions in the addresses issued by the micro processor 206 which constitute the first set of bit positions. The second set of bit positions constitutes the address which is actually applied via the address bus 242

When the ATM cell processing system 200 is switched on the registers 212 and 214 are initialized by the micro processor 206. The micro processor 206 writes the number of memory banks which are coupled to the ATM cell processing system 200 to the register 212 via the signal line 218. The micro processor 206 also writes a pointer to the register 214 via the signal line 220. The pointer points to the first set of bit positions in an address of an access request of the micro processor 206. This set of bit positions serves as a basis to generate the bank select signal to select one of the memory banks 226 to 232 via one of the bank select lines 234-240, respectively.

In the example considered here, there are four memory banks 226-232. Thus two bit positions of a twenty bit wide address word are required to do the bank decoding. In principal any two bit positions of the total of 20 bit positions of an address can serve this purpose. The pointer stored in the register 214 indicates which of the bit positions of an address carries the bank select information. If by definition, this set of bit positions is always placed in a coherent row in the address, one pointer stored in the register 214 is enough to identify this set of bit positions.

One address word contains the bit positions B0 to B19, where B19 is the most significant bit position. If the bit positions B19 and B18 constitute the set of bit positions which carry the bank select information, the pointer stored in the register 214 points to the bit position B19. Since the number of memory banks is N=4 in the example considered here, the decoder 204 understands that there have to be two bit positions (=log₂ N) to encode the bank select information. Thus, the decoder 204 identifies the bit position B19 to which the pointer of register 214 points and in addition the consecutive bit position B18. If more than four banks were present, e.g. eight memory banks, the decoder 204 would also consider the bit position B17 to belong to the set of bit positions carrying the bank select information, correspondingly.

If the bit positions belonging to the set of bit positions carrying the bank select information are not arranged in a continuous row the register 214 stores a pointer for each bit position belonging to the set. In the case of four memory banks considered here, the register 214 can store 2 pointers which point to the bit positions B17 and B9, respectively. The decoder 204 understands this information to indicate that the bit positions B17 and B9 carry the bank select information. In this case the information stored in the register 212 is redundant, since each bit position belonging to the set of bit positions carrying the bank select information has its own pointer stored in the register 214. In this alternative case the register 214 is adapted to store a plurality of pointers.

Alternatively the micro processor 206 can store information in the register 214 to indicate which of the bit positions B0-B19 is most significant. In some cases the whole address space of 20 bits is not required. In such a case the most significant bit position can be one of the lesser significant bit positions in the 20 bit wide address word. For example if the micro processor 206 stores a pointer to bit position B18 in the register 214, this means that the bit position B18 is defined to be the most significant bit position and that the bit position B19 is "don't care".

If the number of memory banks is one, the whole address range from bit position B0-B18 is utilized as a physical address for a memory location in the connection memory 202. If the number of memory banks is two, one bit is required for the bank select. This is the most significant bit B18. Likewise, if three or four memory banks are present, two bit positions are required to encode the bank select information. This information is carried by the bit positions B18 and B17. The further bit positions B16-B0 serve as a physical address for addressing of a specific memory location in the selected memory bank.

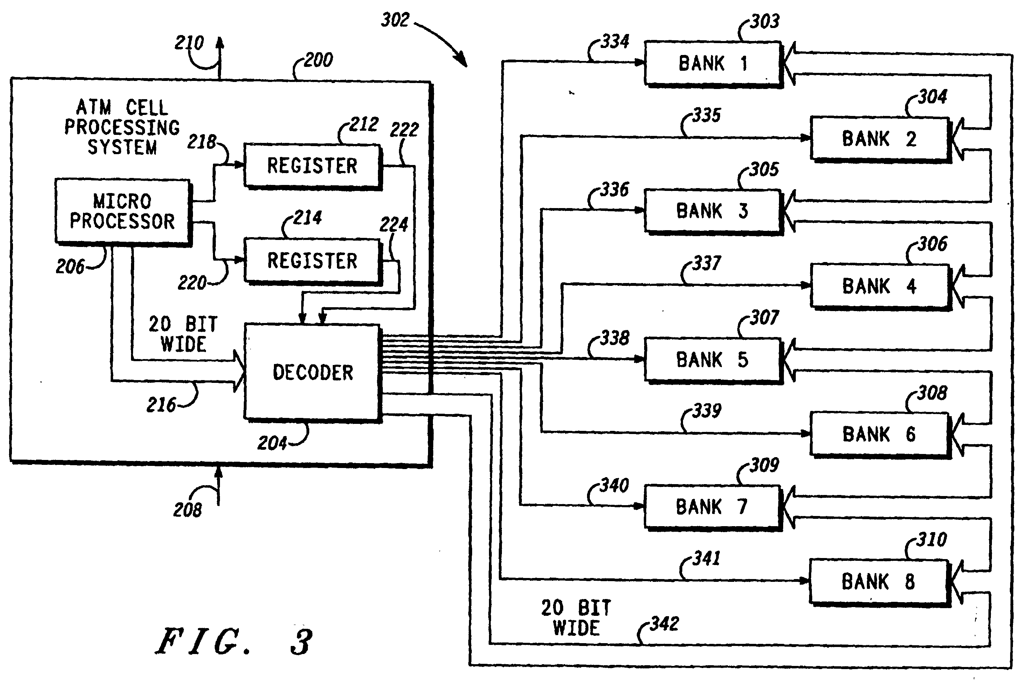

The preferred embodiment shown in FIG. 3 differs from FIG. 2 in that only one logical memory bank 302 is present. The logical memory bank 302 is realized by the physical memory banks 303 to 310 each of which is a separate memory chip. Each of the physical memory banks 303-310 stores a bit slice of three bits of a 24 bit wide data word. As a consequence all 20 bits of the corresponding address word are necessary for each individual memory bank to address the appropriate bit slice. Hence all memory banks 303-310 are connected to the 20 bit wide address bus 342. Also the memory banks 303-310 are coupled to the decoder 204 via their respective bank select lines 334-341. Since there is only one logical memory bank all bank select lines 334-341 are logically equivalent and receive the same select signal.

When the ATM cell processing system of FIG. 3 is initialized, the processor 206 stores "1" in the register 212 via the line 218 to indicate that only one logical memory bank is present. In this case the information stored in the register 214 is "don't care" since no bank decoding is required. If the micro processor 206 wants to access the connection memory 302 it issues an address word of 20 bits which is passed through the decoder via the address bus 342 to each of the memory banks 303 to 310. Since the number stored in the register 212 is "1", this indicates to the decoder that there is only one logical memory bank so that a bank select signal is outputted by the decoder 204 and transmitted via all bank select lines 334-341 to the corresponding memory banks 303-310.

The presence of a plurality of bank select lines for one logical memory bank has the advantage that the load of the lines is split between different drivers which are incorporated in the decoder 204 so that the access time to the connection memory 302 is further decreased. It is to be noted that the ATM cell processing system 200 of the FIG. 2 and 3 can be connected to different arrangements of connection memories just by programming the registers 212 and 214. Since a well defined interface is provided a wide variety of different physical memory components can be used to realize a connection memory.

Also relatively inexpensive memory devices can be employed since no external glue logic is required to couple the physical memory banks to the ATM cell processing system so that there is no additional access delay due to the decoding of the bank select information in the external components as compared to the preferred embodiments of FIG. 2 and 3. Also the reduction of the load which is to be driven when the connection memory is accessed reduces the requirement for high performance memory devices having a very short access time.

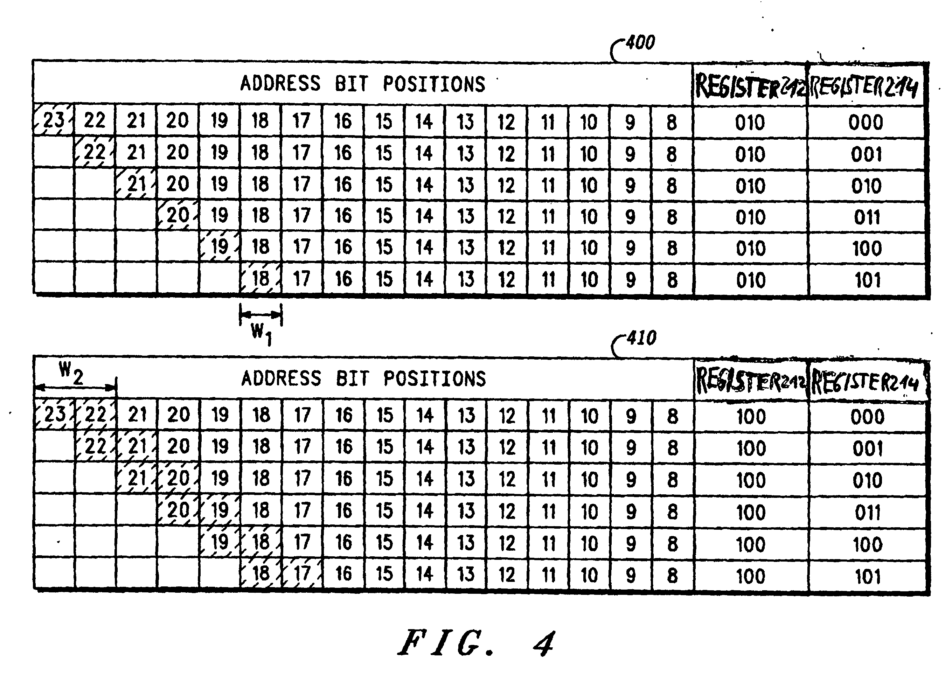

FIG. 4 shows two examples for the programming of the registers 212 and 214. In the table 400 of FIG. 4 the address bit positions 23 to 8 are indicated. The address bit positions 7 to 0 are not shown for simplicity. In the example shown in FIG. 4 the maximum width of an address word is 24 bits. Hence in a corresponding ATM cell processing system of the invention the address bus between micro processor and decoder has to be 24 bits wide if the full address range is to be used.

The table 400 refers to a preferred embodiment where two logical memory banks are present. Correspondingly the register 212 carries the binary information "010" which is the number of logical memory banks. The register 214 stores a pointer to the most significant bit in an address word. If the pointer stored in register 214 is "000" it points to the bit position B23. Likewise, if the pointer is "001" it points to the lesser significant bit position B22 so that the bit position B23 becomes "don't care". Alternatively, if the register 214 has one of the pointers "010", "011", "100" or "101" the corresponding most significant bit positions are B21, B20, B19 and B18.

With other words for each address word issued by the micro processor 206 a window having the length of one bit position is defined which covers the set of bit positions which carry the bank select information. In the example considered here this set only contains one bit position which is the most significant bit position in the address word as defined by the pointer of register 214. This sliding window is denoted W₁ in the table 400.

The table 410 of FIG. 4 shows the programming of the registers 212 and 214 for the case of four logical memory banks . In this case the register 212 carries the binary information "100" and the register 214 can be programmed in the same way as illustrated in table 400. Since in the example shown in table 410 there are four logical memory banks instead of two logical memory banks. Two bit positions are required to carry the bank select information. Hence the sliding window has to carry a set of two bit positions. This sliding window is denoted W₂ in table 410.

If the pointer stored in register 214 is "000", this indicates that the bit position B23 is the most significant bit position. As a consequence the decoder considers this bit position B23 and the following bit position B22 to constitute the set of bit positions which carry the bank select information. Likewise, if the pointer stored in register 214 is "001", "010", "011", "100" or "101" this corresponds to the set of bit positions B22, B21; B21, B20; B20, B19; B19, B18; and B18, B17.

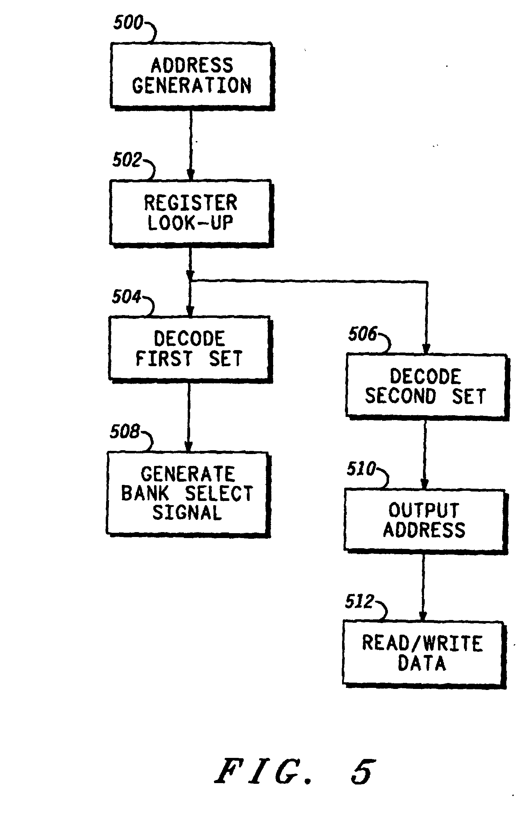

In the following an embodiment of the method of the invention is described with reference to FIG. 5. In step 500 the micro processor 206 generates an address which is outputted via the address bus 216. In response to the reception of the address by the decoder 204, the decoder 204 looks up the registers 212 and 214 in step 502. The information stored in the registers 212 and 214 determines first set of bit positions which carries the bank select information. These bit positions are covered by the sliding window W as shown in FIG. 4.

The first set of bit positions is decoded by the decoder 204 in step 504. In parallel the second set of bit positions which carries the information to address a specific memory location in one of the physical memory banks of the connection memory 202 is also decoded in step 506 by the decoder 204.

Subsequently in step 508 a bank select signal is generated and the appropriate bank select line or the appropriate bank select lines are driven correspondingly. Simultaneously to step 506 the physical address to access a specific memory location is outputted in step 510. As a result in step 512 the micro processor 206 can read and/or write data to the required memory location.

Although the various aspects of the invention have been described with respect to preferred embodiments, it will be understood that the invention is entitled to full protection within the full scope of the appended claims.

## Claims

1. An ATM cell processing system (200), said cell processing system being adapted to be coupled to connection memory means (202,302), said connection memory means (202,302) being organized in one or more memory banks;
said cell processing system (200) comprising:
processor means (206) **characterised by**;
storage means (212) for storage of data indicative of the number of said memory banks; and a
decoder (204) arranged to decode an address of an access request of said processor means (206) to said connection memory means (202,302) to derive bank select information and generate a bank select signal for a memory bank based upon the derived bank select information wherein the data indicating the number of said memory banks stored in the storage means (212) is used as a basis for deriving the bank select information.

2. The ATM cell processing system (200) of claim 1, said address comprising a first set of bit positions to generate said bank select signal and a second set of bit positions to address a memory location in one of said memory banks.

3. The ATM cell processing system (200) of claim 2 further comprising second storage means (214) for storage of a pointer to said first set of bit positions or for indicating the most significant bit position in said address.

4. The ATM cell processing system (200) of claim 2 said first set of bit positions occupying the most significant bit positions of said address.

5. The ATM cell processing system (200) of claim 2 further comprising means for defining a window in said address, said window covering one or more bit positions to generate said bank select signal.

6. The ATM system (200) of claim 1 at least one of said memory banks comprising a plurality of memory components, each said memory components being adapted for storage of one or more bit slices.

7. A method for accessing a connection memory means (202,302) from an ATM cell processing system(200), said memory means (202,302) being organized in one or more memory banks, said method comprising the steps of:
generating in said ATM cell processing system (200) an address for accessing a memory location in said connection memory means (202,302), said address having a first set of bit positions for selecting one of said memory banks and a second set of bit positions for addressing said memory location in said memory bank to be selected;
**characterised in** decoding said first set of bit positions to generate a bank select signal in said ATM cell processing system (200) using data indicating the number of said memory banks stored in storage means (212) as a basis for deriving the bank select signal;
applying said second set of bit positions of said address to all of said memory banks.

## Patentansprüche

1. ATM-Zellenverarbeitungssystem (200), wobei das Zellenverarbeitungssystem adaptiert ist, um mit einem Verbindungsspeichermittel (202, 302) gekoppelt zu werden, wobei das Verbindungsspeichermittel (202, 302) in einer oder mehreren Speicherbanken organisiert ist;
wobei das Zellenverarbeitungssystem (200) umfasst:
Verarbeitungsmittel (206) **gekennzeichnet durch**;
Speichermittel (212) zum Speichern von Daten, die die Anzahl der Speicherbanken anzeigen; und einen
Decodierer (204), der geeignet ist, um eine Adresse einer Zugriffsanfrage des Verarbeitungsmittels (206) auf das Verbindungsspeichermittel (202, 302) zu decodieren, um Bankauswahlinformationen abzuleiten und ein Bankauswahlsignal für eine Speicherbank basierend auf den erlangten Bankauswahlinformationen zu erzeugen, wobei die Daten, die die Anzahl der in dem Speichermittel (212) gespeicherten Speicherbanken anzeigen, als eine Basis zum Ableiten der Bankauswahlinformationen verwendet werden.

2. ATM-Zellenverarbeitungssystem (200) gemäß Anspruch 1, wobei die Adresse einen ersten Satz von Bitpositionen umfasst, um das Bankauswahlsignal zu erzeugen, und einen zweiten Satz von Bitpositionen umfasst, um einen Speicherort in einer der Speicherbanken zu adressieren.

3. ATM-Zellenverarbeitungssystem (200) gemäß Anspruch 2, das weiter ein zweites Speichermittel (214) zum Speichern eines Zeigers zu dem ersten Satz von Bitpositionen oder zum Anzeigen der signifikantesten Bitposition in der Adresse umfasst.

4. ATM-Zellenverarbeitungssystem (200) gemäß Anspruch 2, wobei der erste Satz von Bitpositionen die signifikantesten Bitpositionen der Adresse besetzt.

5. ATM-Zellenverarbeitungssystem (200) gemäß Anspruch 2, das weiter Mittel zum Definieren eines Fensters in der Adresse umfasst, wobei das Fenster eine oder mehrere Bitpositionen abdeckt, um das Bankauswahlsignal zu erzeugen.

6. ATM-System (200) gemäß Anspruch 1, wobei mindestens eine der Speicherbanken eine Mehrzahl von Speicherkomponenten umfasst, wobei jede der Speicherkomponenten geeignet ist, um ein oder mehrere Bit-Slices zu speichern.

7. Verfahren zum Zugreifen auf ein Verbindungsspeichermittel (202, 302) aus einem ATM-Zellenverarbeitungssystem (200), wobei das Speichermittel (202, 302) in einer oder mehreren Speicherbanken organisiert ist, wobei das Verfahren die folgenden Schritte umfasst:
Erzeugen, in dem ATM-Zellenverarbeitungssystem (200), einer Adresse zum Zugreifen auf einen Speicherort in dem Verbindungsspeichermittel (202, 302), wobei die Adresse einen ersten Satz von Bitpositionen zum Auswählen einer der Speicherbanken und einen zweiten Satz von Bitpositionen zum Adressieren des Speicherortes in der auszuwählenden Speicherbank hat;
**gekennzeichnet durch** ein Decodieren des ersten Satzes von Bitpositionen, um ein Bankauswahlsignal in dem ATM-Zellenverarbeitungssystem (200) **durch** Verwenden von Daten zu erzeugen, die die Anzahl der in dem Speichermittel (212) gespeicherten Speicherbanken als eine Basis zum Ableiten des Bankauswahlsignals anzeigen;
Zuführen des zweiten Satzes von Bitpositionen der Adresse zu allen Speicherbanken.

## Revendications

1. Système de traitement de cellule ATM (200), ledit système de traitement de cellule étant adapté pour être couplé à un moyen de mémoire de connexion (202, 302), ledit moyen de mémoire de connexion (202, 302) étant organisé selon un ou plusieurs groupes de mémoire,
ledit système de traitement de cellule (200) comprenant :
un moyen de processeur (206) **caractérisé par** :
un moyen de stockage (212) pour le stockage de données indicatives du nombre desdits groupes de mémoire ; et
un décodeur (204) qui est agencé pour décoder une adresse d'une requête d'accès dudit moyen de processeur (206) sur ledit moyen de mémoire de connexion (202, 302) afin de dériver une information de sélection de groupe et afin de générer un signal de sélection de groupe pour un groupe de mémoire sur la base de l'information de sélection de groupe dérivée où les données indiquant le nombre desdits groupes de mémoire comme stocké dans le moyen de stockage (212) sont utilisées en tant que base pour dériver l'information de sélection de groupe.

2. Système de traitement de cellule ATM (200) selon la revendication 1, ladite adresse comprenant un premier jeu de positions binaires pour générer ledit signal de sélection de groupe et un second jeu de positions binaires pour adresser une localisation de mémoire dans l'un desdits groupes de mémoire.

3. Système de traitement de cellule ATM (200) selon la revendication 2, comprenant en outre un second moyen de stockage (214) pour le stockage d'un pointeur sur ledit premier jeu de positions binaires ou pour indiquer la position binaire de poids le plus fort dans ladite adresse.

4. Système de traitement de cellule ATM (200) selon la revendication 2, ledit premier jeu de positions binaires occupant les positions binaires de poids le plus fort de ladite adresse.

5. Système de traitement de cellule ATM (200) selon la revendication 2, comprenant en outre un moyen pour définir une fenêtre dans ladite adresse, ladite fenêtre couvrant une ou plusieurs positions binaires pour générer ledit signal de sélection de groupe.

6. Système ATM (200) selon la revendication 1, au moins l'un desdits groupes de mémoire comprenant une pluralité de composants de mémoire, chacun desdits composants de mémoire étant adapté pour le stockage d'une ou de plusieurs tranches binaires.

7. Procédé pour accéder à un moyen de mémoire de connexion (202, 302) depuis un système de traitement de cellule ATM (200), ledit moyen de mémoire (202, 302) étant organisé selon un ou plusieurs groupes de mémoire, ledit procédé comprenant les étapes de :
génération, dans ledit système de traitement de cellule ATM (200), d'une adresse pour accéder à une localisation de mémoire dans ledit moyen de mémoire de connexion (202, 302), ladite adresse comportant un premier jeu de positions binaires pour sélectionner l'un desdits groupes de mémoire et un second jeu de positions binaires pour adresser ladite localisation de mémoire dans ledit groupe de mémoire à sélectionner,
**caractérisé par** le décodage dudit premier jeu de positions binaires pour générer un signal de sélection de groupe dans ledit système de traitement de cellule ATM (200) en utilisant des données indiquant le nombre desdits groupes de mémoire comme stocké dans un moyen de stockage (212) en tant que base pour dériver le signal de sélection de groupe ; et
application dudit second jeu de positions binaires de ladite adresse sur tous lesdits groupes de mémoire.
